# EUROPEAN PATENT SPECIFICATION

(11) **EP 0 321 107 B1**
(45) Date of publication and mention of the grant of the patent: **25.01.1995**
(21) Application number: 88311136.1
(22) Date of filing: 24.11.1988
(51) Int. Cl.: C08G 63/60, C08G 63/68, C09K 19/38

(54) **Thermotropic liquid-crystalline aromatic polyesters**
Thermotrope, flüssigkristalline, aromatische Polyester
Polyesters liquides cristallins, aromatiques et thermotropiques

(30) Priority: 24.11.1987 IT 2274687
(43) Date of publication of application: 21.06.1989
(73) Proprietor: HIMONT ITALIA S.r.l., I-20121 Milano (IT)
(72) Inventor: Coassolo, Alfredo, I-28100 Novara (IT); Sabarino, Giorgio, I-13100 Vercelli (IT); Foa', Marco, I-28100 Novara (IT); Chapoy, Lawrence L., I-28100 Lesa (NO) (IT)
(74) Representative: Whalley, Kevin

(56) References cited:
- EP-A- 0 056 149
- EP-A- 0 167 130
- EP-A- 0 189 073
- EP-A- 0 201 831
- WO-A-85/03712
- DE-A- 2 520 317
- US-A- 4 617 370
- CHEMICAL ABSTRACTS, vol. 85, no. 17, 25th October 1976, page 607, lefthand column, abstract no. 123517m, Columbus, Ohio, US; L.A. KARAMYSHEVA et al.: "Liquid-crystal compounds.VI.Synthesis and mesomorphism of esters of 4,4'-dihydroxybiphenyl and its analogs."; & Zh. Org. Khim 1976, 12(7), 1508-1511

## Description

The present invention relates to thermotropic liquid-crystalline aromatic polyesters. More particularly, the present invention relates to such polyestes which are easily processible in the molten state, and which have a mesogen group in their main chain.

Thermotropic polyesters, which hence show an optical anisotropy in the molten state, are well known and described; see, for example, as in British polymer Journal (Dec, 1980), page 154: "Liquid Crystal Polymer"; Journal of Macromolecular Science-Chemistry (1984), page 1705: "Liquid Crystalline Aromatic Polyesters"; Die Augewandte Makromolekulare Chemie (1982), 109-110, page 1: "Rigid Chain Polymers"; Die Augewandte Makromolekulare Chemie (1986), 145-146, page 231: "Thermotropic Liquid Crystalline Polymers;" and Journal of Molecular Science Review (1986) C26(4), page 551: "Liquid Crystalline Polymers: A Novel State of Material".

The use of such polyesters makes it possible to obtain films, fibres or moulded articles, for example, by injection moulding, which have suitable characteristics of stiffness, hardness and tenacity.

The polymers having the above properties are generally easily processible in the molten state, highly resistant to heat and oxidation and, furthermore, due to their crystallinity, such polymers display high HDT (Heat Distortion Temperature) values and are highly resistant to attack by solvents.

The polymers which can be obtained by the polycondensation of terephthalic acid and 4,4′-dihydroxydiphenyl melt at too high temperatures to be capable of being easily processed. One method used to decrease their melting point consists in using a plurality of substituents on the aromatic rings of the diphenol, or of the terephthalic acid, or in modifying the polymer by means of the addition of other comonomers.

U.S. Patent No. 3,637,595 discloses the preparation of thermotropic liquid-crystalline polyesters by the polycondensation of 4,4′-dihydroxy-diphenyl, terephthalic acid, and p-hydroxy-benzoic acid. The resultant polymer, even though showing good mechanical characteristics and good resistance to oxidation and to attack by solvents, has a high melting point, above 420°C, and is therefore difficult to process, or in any event requires nonconventional equipment for injection-moulding.

In U.S. Patent No. 3,975,487, the above problem is partially overcome by using "bent" co-monomers, such as isophthalic acid, the presence of which, however, in large amounts, may lead to the disappearance of the liquid-crystalline characteristics of the end polymer. Furthermore, although the product obtained has a melting point below 400°C, this is still so high as to make the polymer difficult to process.

The Journal of Polymer Science: Polymer Physics Edition, vol. 21, 1119, describes the preparation of polyesters starting from 4,4′-dihydroxy-diphenyl and several aliphatic diacids. However, such polymers, owing to the presence of aliphatic-chain compounds, do not have very interesting physico-mechanical properties.

U.S. Patent No. 4,617,370 discloses the preparation of liquid-crystalline polymers starting from 4,4′-dihydroxy-diphenyl substituted in its 3,3′,5,5′-positions with phenyl radicals, or alkyl or alkoxy radicals having a lower number of carbon atoms, and in at least one of its 2,2′,6,6′-positions, with a halogen. This monomer unit is reacted with dicarboxy aromatic acids and with hydroxy aromatic acids, and the resulting polymer has a melting point of from 270° to 350°C. However, a polymer having liquid-crystalline properties can only be obtained if a hydroxy aromatic acid is used in the polymerization mixture; otherwise the polymer will be isotropic in the molten state.

In EP-A- 0201,831, thermotropic liquid-crystalline polyesters are disclosed which are obtained by the polycondensation of a dicarboxy aromatic acid and 4,4′-dihydroxy diphenyl substituted in its 3,3′-positions with two phenyl radicals. In this case, too, the product obtained has a high melting pont, above 350°C, and it is hence difficult to process and to convert into useful end products.

In accordance with the present invention, it has now been found that the above drawbacks may be mitigated if mono-substituted derivatives of 4,4′-diphenyl are used as starting components.

According to the invention there is provided a thermotropic liquid-crystalline aromatic polyester which comprises:
(a) units derived from one or more essentially monosubstituted phenols of the formula: 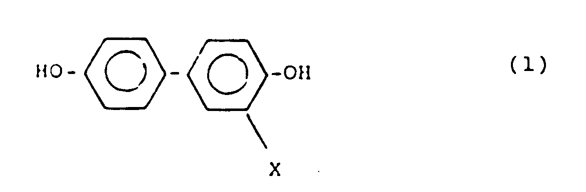 in which X is a halogen atom; an aralkyl radical containing at least 7 carbon atoms, and preferably from 7 to 15 carbon atoms; a mono-aryl, di-aryl or condensed aryl group containing from 6 to 18 carbon atoms; or a keto group -COR (in which R is an alkyl or aryl group containing from 1 to 12 carbon atoms, and which may be substituted with groups inert under the reaction conditions, such as halogen atoms or alkyl groups with a small number of carbon atoms);
(b) units derived from one or more dicarboxylic acids of the formula:

   HOOC - R₁ - COOH (2)

   in which R₁ is a cycloalkyl, monoaryl, diaryl or condensed aryl group containing from 6 to 18 carbon atoms, and which may be substituted with groups inert under the reaction conditions, such as halogen atoms, or alkyl groups containing a small number of carbon atoms;
(c) optionally, units derived from one or more hydroxyacids of the formula:

   HO-Ar₁-(CH=CH)ₙ-COOH (3)

   in which Ar₁ is a monaryl, diaryl or condensed aryl group containing up to 18 carbon atoms, and which may be substituted with groups inert under the reaction conditions, such as halogen atoms or alkyl groups containing a small number of carbon atoms, and
   n is 0 or 1; and
(d) optionally, units derived from one or more diphenols of the formula:

   HO - Ar₂ - OH (4)

   in which Ar₂ is a monoaryl or condensed aryl group containing from 6 to 18 carbon atoms, and which may be substituted with at least one group X (as defined above), or an unsubstituted diaryl group.

By the term "alkyl groups containing a small number of carbon atoms", as used herein we mean alkyl groups containing from 1 to 4 carbon atoms.

According to a preferred embodiment of the invention, the diphenols as defined under (a) are essentially mono-substituted; however, blends also containing disubstituted derivatives may be used as well. In such blends, the content of di-substituted diphenol, preferably substituted in the 3- and 3'-positions, may vary over a wide range; however, blends containing up to 20 mol % of di-substituted derivative will be most commonly used.

According to a further preferred embodiment of the invention, at least 90 mol % of the compounds of formulae (2), (3), and (4) have both their functional groups in such positions as to form a polymeric chain with a substantially coaxial or parallel direction .

Examples of substituted diphenols of formula (1) are chloro- and bromo-4,4'-dihydroxy-diphenyl; phenyl-ethyl-4,4'-dihydroxy-diphenyl (1-methyl-1-phenyl-ethyl)-4,4'-dihydroxy-diphenyl; naphthyl-4,4'-dihydroxy diphenyl; acetyl-4,4'-dihydroxy-diphenyl; propionyl-4,4'-dihydroxy-diphenyl; benzoyl,4,4'-dihydroxy-diphenyl; phenyl-4-4'-dihydroxy-diphenyl; etc.

Examples of dicarboxylic aromatic acids of formula (2) are terephthalic acid; chloro- and bromo-terephthalic acid; methyl-terephthalic acid; 1-4-napthalene-dicarboxylic acid; 1,5-naphthalene-dicarboxylic acid; 2,6-naphthalene-dicarboxylic acid; 4,4'-diphenyl-dicarboxylic acid; 3,3'-dibromo-4,4'-diphenyl-dicarboxylic acid; 4,4'-stilbene-dicarboxylic acid; etc.

Examples of hydroxy acids of formula (3) are p-hydroxy-benzoic acid; 3-chloro-4-hydroxy-benzoic acid; 3-bromo- 4-hydroxy-benzoic acid; 3,5-dichloro-4-hydroxy-benzoic acid; 3-methyl-4-hydroxy-benzoic acid; 3-tert.-butyl-4-hydroxy-benzoic acid; 4-hydroxy-1-naphthoic acid; 6-hydroxy-2-naphthoic acid; p-(4-hydroxy-phenyl)-benzoic acid; p-hydroxycinnamic acid; etc.

Examples of aromatic diols of formula (4) are hydroquinone; phenyl-hydroquinone; (1-phenyl-ethyl)-hydroquinone; 2,5-bis(phenyl-ethyl)hydroquinone; 2-(alpha-phenyl-isopropyl)hydroquinone; 2,5-bis(alpha-phenyl-isopropyl)hydroquinone; 4,4'-dihydroxy-diphenyl; 2,6-dihydroxy-naphthalene; etc.

The molar ratio, (d)/(a), of units derived from the phenols as defined under (d) to the units derived from the diphenols as defined under (a), is suitably from 0 to 1, whilst the molar ratio, (c)/(b), of units derived from the hydroxy acids as defined under (c) to the units derived from the acids as defined under (b), is suitably from 0 to 4.

The polymers of the present invention are optically anisotropic in the molten state, as can be verified by optical microscopic analysis under polarized light, and generally have an inherent viscosity, measured in a 1:1 mixture of trifluoro-acetic acid and methylene chloride at 30°C or in pentafluoro-phenol at 60°C, both at a concentration of 0.25 g/litre, of from 0.3 to 4.

The melting temperature of the polyesters may vary over wide limits according to the composition of the polymer and the degree of polymerisation. Generally, the meiting temperature will be from 200° to 350°C.

The molecular weight and the crystallinity of the polyesters may be increased by heating the polymer particles in an inert medium, or under vacuum, at a temperature just below the melting point, for a time ranging from 1 to 20 hours.

The polymers of the invention are well suited for producing fabricated bodies which may be prepared by means of the usual techniques of the manufacture of thermoplastic polymers such as, e.g., injection moulding or extrusion. The polymers may be processed to yield films or fibres; they may be used as matrices for composite materials based on inorganic fibres or fillers; or they may be used in the preparation of blends with other polymers.

The liquid-crystalline polymers of the invention may be prepared, according to conventional techniques, by reacting the starting materials (which are commercially available or readily preparable by the techniques of organic chemistry) under usual conditions for the preparation of polyester resins.

For example, the polyesters may be obtained in the molten state, or in the presence of a dispersing medium having a high boiling point (such as diphenyl-sulphone or mixtures of partially hydrogenated terphenyls) by transesterification between the dicarboxylic aromatic acids and the acetates or propionates of the phenols, and possibly the hydroxy acids, at temperatures of from 270° to 370°C, so as to favour the complete release of the carboxy acids, also operating under vacuum.

If desired, the reaction may be carried out in the presence of a transesterification catalyst such as, e.g., an alkali or alkaline earth metal phosphate. Further catalysts may be those which are commonly used in polycondensation processes, and are described in "Encyclopaedia of Polymer Science and Technology" (1969, Vol. 10, pages 722-723). Examples of such further catalysts are the oxides, hydroxides, hydrides, halides, alkoxides and phenates, the salts and the complex salts of the organic or inorganic acids of lithium, sodium, potassium, magnesium, calcium, titanium, manganese, cobalt, zinc, tin, antimony, lanthanum, cerium, lead and germanium.

The amount of catalyst is suitably from 0.005 to 1 mol %, and is preferably from 0.01 to 0.2 mol %, calculated relative to the total amount of the reactants.

According to an alternative method, the liquid-crystalline polyesters of the present invention may be obtained in solution by polycondensation between the halides of the dicarboxy aromatic acids and a mixture of the phenols in a suitable solvent. The reaction temperature is suitably from 25° to 220°C, and the reaction is carried out in the presence of a base and/or of a stream of nitrogen in order to favour the elimination of the hydrogen halide. Among the bases, pyridine is preferred, whilst among the solvents, the chlorinated solvents, both aliphatic and aromatic, are preferred, e.g. methylene chloride, chlorobenzene, dichloro-benzenes, and trichloro-benzenes.

The resultant polymer is subsequently recovered by evaporating the solvent, or by precipitation with a non-solvent, and subsequent filtration.

In order that the invention may be well understood the following Examples are given by way of illustration only.

### Example 1

### Preparation of 3-phenylethyl-4,4′-dihydroxy-diphenyl

To a 5-necked glass flask of 500 cc capacity equipped with a mechanical stirrer, condenser, thermometer, and nitrogen inlet tube, there were charged, under a slow stream of nitrogen, 91.05 g (489 mM) of 4,4′-dihydroxy-diphenyl, 330 cc of tetraethyleneglycol-dimethylether, and 8 g of p-toluenesulphonic acid monohydrate.

The temperature was increased to 140°C with stirring and under a nitrogen stream, then 51 g (489 mM) of styrene were added dropwise over 2 hours. The reaction mixture was maintained at this temperature for a further 5 hours.

When the reaction was complete, the mixture was cooled to room temperature and was poured into ethyl ether. The resultant ethereal solution, after washing with water and sodium bicarbonate to neutrality, was dried over anhydrous sodium sulphate. After filtration and solvent evaporation, the residue was fractionated over a silica-gel column, using methylene chloride as the eluent. There were obtained 60 g of 3-phenyl-ethyl-4,4′-dihydroxy-diphenyl, characterised by means of N.M.R. and gas-mass analysis.

### Example 2

### Preparation of 3-(1-methyl-1-phenylethyl)-4,4′-dihydroxy-diphenyl

To a glass flask of 250 cc capacity, equipped with a mechanical stirrer, condenser, thermometer, and nitrogen inlet pipe, there were charged, under a slow stream of nitrogen, 34.2 g (183.6 mM) of 4,4′-dihydroxy-diphenyl, 25 g (183.6 mM) of 2-phenyl-2-propanol, 4 g of p-toluenesulphonic acid monohydrate, and 150 cc of tetraethyleneglycol-dimethylether. Still with stirring, and under a nitrogen stream, the temperature was increased to 140°C, and this temperature was maintained for 7 hours. When the reaction was complete, the mixture was cooled to room temperature and was poured into ethylether.

The resultant ethereal solution, after washing with water and then with a saturated solution of sodium bicarbonate to neutrality was dried over anhydrous sodium sulphate. After filtration and solvent evaporation, a solid residue of 23 g was obtained, which had the following gas-chromatographic composition:

| | |
|---|---|
| 4,4′-dihydroxy-diphenyl | 40.6% |
| 3-(1-methyl-1-phenylethyl)-4,4′-dihydroxy-diphenyl | 53.2% |
| 3,3′-bis(1-methyl-1-phenylethyl)-4,4′-dihydroxy-diphenyl | 3.8% |
| reaction byproducts | 3.4% |

The solid residue was fractionated over a silica gel column, using methylene chloride as eluent.

There were obtained 11 g of 3-(1-methyl-1-phenylethyl)-4,4′-dihydroxy-diphenyl, characterised by means of N.M.R. and gas-mass analysis, and having a melting point of about 143°C.

### Example 3

To a 4-necked flask of 100 cc capacity, equipped with a mechanical stirrer, condenser, thermometer and nitrogen inlet tube, there were charged, under a slow stream of nitrogen, 2.66 g (13.12 mM) of terephthalic acid dichloride, 3.72 g (12.82 mM) of 3-phenylethyl-4-4′- dihydroxy-diphenyl, 0.12 g (0.3 mM) of 3,3′-diphenyl- ethyl-4,4′-dihydroxy-diphenyl, and 60 cc of 1,2,4,- trichloro-benzene.

The reaction mixture was kept at room temperature for 20 minutes with stirring and under a nitrogen stream, and the temperature was then increased to 200°C. The reaction mixture was maintained at this temperature for 12 hours, until the evolution of HCl had practically ended. The mixture was then allowed to cool, still under nitrogen and with stirring. When the reaction mixture had reached a temperature of 50°C, the jelly-like mass was poured into acetone and the preceipitate was filtered off.

The resultant polymer was washed with acetone (twice), hot water (twice), and acetone/methanol (twice). The end product was dried under vacuum for 2 hours and 30 minutes at 180°-190°C.

The dried polymer had a melting temperature (Tₘ) of 290°C,, and an inherent viscosity of 1.27 (as measured at 30°C in a solvent composed of equal volumes of trichloroacetic acid and methylene chloride, at a concentration of 0,25 g/litre).

The molten polymer was optically anistropic when observed under a microscope under polarized light.

### Examples 4 and 5

Other polyesters were prepared according to the procedure as described in Example 3. The amounts of the reactants and the characteristics of the polyesters are listed in Table 1.

**Table 1**

| Example | (a) (mol) | (b) (mol) | (c) (mol) | (d) (mol) | Inherent Viscosity | Melting Temperature (Tₘ in °C) |
|---|---|---|---|---|---|---|
| 4 | 1 | 0.90 | 0.10 | - | 1.60 | 272 |
| 5 | 1 | 0.80 | - | 0.20 | 1.80* | 283 |

| | | | | | | |
|---|---|---|---|---|---|---|
| (a) terephthalic acid dichloride | | | | | | |
| (b) 3-(phenyl-ethyl)-4,4′-dihydroxy-diphenyl | | | | | | |
| (c) hydroquinone | | | | | | |
| (d) 4′-dihydroxy-diphenyl | | | | | | |
| * inherent viscosity, measured in pentafluoro-phenol at 60°C and at a concentration of 0.25 g/litre. | | | | | | |

The polymers of Examples 4 and 5 were optically anisotropic in the molten state.

### Example 6

Using the same equipment and procedure as in Example 3, 1.60 g (7.89 mM) of terephthalic acid dichloride, 2.4 g (7.89 mM) of 3-(1-1-methyl-1-phenyl-ethyl)-4,4′-dihydroxydiphenyl, and 40 cc of 1,2,4-trichlorobenzene were polymerized for 16 hours.

The end product was dried under vacuum for 2 hours and 30 minutes at 180°-190°. The dried polymer had a melting temperature (Tₘ) of 325°C, and an inherent viscosity of 0.85.

The molten polymer was optically anisotropic when observed under the polarized-light microscope.

### Examples 7 and 8

Other polyesters were prepared according to the procedure described in Example 6. The amounts of the reactants and the characteristics of the polyesters are listed in Table 2.

**Table 2**

| Example | (a) (mol) | (b) (mol) | (c) (mol) | (d) (mol) | Inherent Viscosity | Melting Temperature (Tₘ in °C) |
|---|---|---|---|---|---|---|
| 7 | 1 | 0.90 | 0.10 | - | 0.55 | 300-320 |
| 8 | 1 | 0.90 | - | 0.10 | 0.82 | 318 |

| | | | | | | |
|---|---|---|---|---|---|---|
| (a) terephthalic acid dichloride | | | | | | |
| (b) 3-(1-methyl-1-phenyl-ethyl)-4,4′-dihydroxy-diphenyl | | | | | | |
| (c) hydroquinone | | | | | | |
| (d) 4,4′-dihydroxy-diphenyl. | | | | | | |

The polymers of Examples 7 and 8 were optically anisotropic in the molten state.

### Example 9

To a 4-necked glass flask of 250 cc capacity, equipped with a mechanical stirrer, condenser, theremometer and nitrogen inlet tube, there were charged, under a slow nitrogen steam, 4.0 g (19.72 mM) of terephthalic acid dichloride, 3.0 g (9.86 mM) of 3-(1-methyl-1-phenyl-ethyl)-4,4'⁻dihydroxydiphenyl, 2.24 g (9.86 mM) of (1-methyl-1-phenyl-ethyl)-hydroquinone, and 92 cc of 1,2,4-trichlorobenzene.

The reaction mixture was maintained at room temperature for 20 minutes with stirring and under a nitrogen stream; the temperature was then increased to 220°C. The reaction mixture was maintained at this temperature for 16 hours. At the end of this time, the evolution of HCl had practically ceased.

The reaction mixture was allowed to cool, still with stirring and under a nitrogen stream. When the reaction mixture has reached 50°C, the jelly-like mixture was poured into acetone, and the precipitate was filtered off. The resultant polymer was washed with acetone (twice), hot water (twice), and acetone/methanol twice). The end product was dried under vacuum for 2 hours and 30 minutes at 180°-190°. The dried polymer was amorphous and had a T_{g} (glass transition temperature) of 159°C.

The inherent viscosity of the polymer is 1.12 (as measured at 30°C in a solvent composed of equal volumes of trichloroacetic acid and methylene chloride, at a concentration of 0.25 g/litre).

When observed under a polarized light microscope equipped with a heating stage, the polymer was optically anisotropic in the fluid state.

### Examples 10

Using the same equipment and procedure as in Example 9, 4.98 g (24.52 mM) of terephthalic acid dichloride, 3.56 g (12.26 mM) of 3-(phenyl-ethyl)-4,4'-dihydroxy-diphenyl, 2.62 g (12.26 mM) of (phenylethyl)-hydroquinone, and 110 cc of 1,2,4-trichlorobenzene were polymerized for 12 hours. At the end of this time, practically no further HCl developed. The end product was dried for 3 hours at 170°C. The dried polymer was amorphous and had a Tg of 147°C, and an inherent viscosity of 1.22.

When observed under a polarized light microscope equipped with a heating stage, the polymer was optically anisotropic in the fluid state.

### Example 11

Using the same equipment and procedure was in Examples 9, 5.46 g (27 mM) of terephthalic acid dichloride, 4.11 g (13.5 mM) of 3-(1-methyl-1-phenyl-ethyl)-4,4'-dihydroxy-diphenyl, 2.49 g (13.5 mMO of phenyl-hydroquinone, and 120 cc of 1,2,4-trichlorobenzene were polymerised for 16 hours. At the end of this time, practically no further HCl developed. The end product was dried for 3 hours at 180°C. The dried polymer was amorphous and had a T_{g} of 148°C, and an inherent viscosity of 0.88.

When observed under a polarized light microscope equipped with a heating stage, the polymer was optically anisotropic in the fluid state.

### Example 12

To a 4-necked glass flask of 100 cc capacity, equipped with mechanical stirrer, nitrogen inlet tube, theremometer and distillation head, there were charged, under a slow nitrogen stream, 3.09 g (22.4 mM) of p-hydroxy-benzoic acid, 3.72 g (22.4 mM) of terephthalic acid, 6.50 g (22.4 mM) of 3-phenyl-ethyl)-4-4'-dihydroxy-diphenyl, 0.30 g of trisodium phosphate dodcahydrate, 8.5 g of acetic anhydride, and 20 g of di-phenyl-sulphone. Under a slight nitrogen stream, and with stirring, the reaction mixture was heated to 140°C by means of a high-temperature silicone oil bath. The reaction mixture was maintained at this temperature for 1 hour, and acetic acid began to distill off. The temperature was then increased to 240°C, and was maintained at this value for a further hour.

The oil bath was heated to 270°C for 40 minutes, to 290°C for 30 minutes, and finally, to 320°C for a further 30 minutes.

The reaction mixture was allowed to cool to room temperature, still under a slight nitrogen stream, and the solid mass which was obtained was finely ground.

The resultant power was washing twice with acetone, twice with water, and twice with acetone/methanol. The end product was dried under vacuum for 2 hours and 30 minutes at 150°C. The resultant polymer was amorphous and had a T_{g} of 135°C and an inherent viscosity of 1.31.

When observed under a polarised light microscope equipped with a heating stage, the polymer was optically anisotropic in the fluid state.

## Claims

1. a thermotropic liquid-crystalline aromatic polyester which comprises:
a) units derived from one or more essentially monosubstituted phenols of the formula: 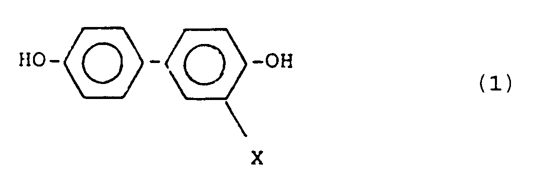 in which X is a halogen atom; an aralkyl group containing at least 7 carbon atoms; a mono-aryl, di-aryl or condensed aryl group containing from 6 to 18 carbon atoms; or a keto group -COR (in which R is an alkyl or aryl group containing from 1 to 12 carbon atoms, and which may be substituted with inert substituents);
b) units derived from one or more dicarboxylic acids of the formula:
HOOC - R₁ - COOH (2)
in which R₁ is a cycloalkyl, monoaryl, diaryl or condensed aryl group containing from 6 to 18 carbon atoms, which may be substituted with inert substituent groups;
c) optionally, units derived from one or more hydroxyacids of the formula:
HO-Ar₁-(CH=CH)ₙ-COOH (3)
in which Ar₁ is a monoaryl, diaryl or condensed aryl group containing from 6 to 18 carbon atoms, and which may be substituted with inert substituents; and n is 0 or 1: and
d) optionally, units derived from one or more diphenols of the formula:
HO - Ar₂ - OH (4)
in which Ar₂ is a monoaryl or condensed aryl group containing from 6 to 18 carbon atoms and which may be substituted with at least one group X (as defined above), or an unsubstituted diaryl group.

2. A polyester according to claim 1 characterized in that the diphenols as defined under (a) are in admixture with corresponding di-substituted derivatives.

3. A polyester according to claim 2, characterized in that the disubstituted derivatives are present in the mixture in amounts of up to 20 mol %.

4. A polyester according to any one of the preceding claims characterized in that at least 90 mol % of the compounds of formulae (2), (3) and (4) have their two functional groups in such positions as to form a polymeric chain in a substantially coaxial or parallel direction.

5. A polyester according to any one of the preceding claims characterized in that the substituted diphenol of formula (1) is chloro- or bromo- 4,4'-dihydroxy-diphenyl; (1-methyl-1-phenyl-ethyl)-4,4'-dihydroxy-diphenyl; naphthyl-4,4'-dihydroxy-diphenyl; acetyl-4,4'-dihydroxy-diphenyl; propionyl-4,4'-dihydroxy-diphenyl; benzoyl-4,4'-dihydroxy-diphenyl; or phenyl-4,4'-dihydroxy-diphenyl; and/or the dicarboxylic aromatic acid of formula (2) is terephthalic acid; chloro- or bromo- terephthalic acid; methyl-terephthalic acid; 1,4-naphthalene-dicarboxylic acid; 1,5-naphthalene-dicarboxylic acid; 2,6-naphthalene-dicarboxylic acid; 4,4'-diphenyl-dicarboxylic acid; 3,3'-dibromo-4,4'-diphenyl-dicarboxylic acid, or 4,4'-stilbene-dicarboxylic acid.

6. A polyester according to any one of the preceding claims characterized in that the hydroxy acid of formula (3) is p-hydroxy-benzoic acid; 3-chloro-4-hydroxy-benzoic acid; 3-bromo-4-hydroxy-benzoic acid; 3,5-dichloro-4-hydroxy-benzoic acid; 3-methyl-4-hydroxy-benzoic acid; 3-tert.-butyl-4-hydroxy-benzoic acid; 4-hydroxy-1-naphthoic acid; 6-hydroxy-2-naphthoic acid; p-(4-hydroxy-phenyl)-benzoic acid; or p-hydroxycinnamic acid; and/or the aromatic diol of formula (4) is hydroquinone; phenyl-hydroquinone; (1-phenyl-ethyl)-hydroquinone; 2,5-bis(phenyl-ethyl)hydroquinone; 2-(alpha-phenyl-isopropyl)-hydroquinone; 2,5-bis(alpha-phenyl-isopropyl)-hydroquinone; 4,4'-dihydroxydiphenyl; or 2,6-dihydroxy-naphthalene.

7. A polyester according to any one of the preceding claims characterized in that the molar ratio, (d)/(a), of the units derived from the phenols as defined under (d) to units derived from the diphenols as defined under (a) is from 0 to 1, and the molar ratio, (c)/(b), of units derived from the hydroxyacids as defined under (c) to units derived from the acids, as defined under (b), is from 0 to 4.

8. A polyester according to any one of the preceding claims characterized in that it has an inherent viscosity, measured in a 1:1 mixture of trifluoroacetic acid and methylene chloride at 30°C or in pentafluorophenol at 60°C, at a concentration of 0.25 g/litre, of from 0.3 to 4, and has a melting temperature of from 200° to 350°C.

9. The use of a polyester as claimed in one of the preceding claims as a fibre, film, shaped article formed by injection or extrusion, matrix for a composite material based on inorganic fibres or fillers, or in admixture with other polymers.

## Patentansprüche

1. Thermotroper, flüssigkristalliner, aromatischer Polyester, umfassend:
a) Einheiten, abgeleitet von einem oder mehreren im wesentlichen monosubstituierten Phenolen der Formel: 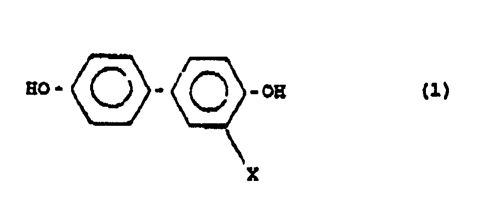 worin X ein Halogenatom; eine Aralkylgruppe, enthaltend mindestens 7 Kohlenstoffatome; eine Monoaryl-, Diaryl-oder kondensierte Arylgruppe, enthaltend 6 bis 18 Kohlenstoffatome, oder eine Ketogruppe -COR bedeutet (worin R eine Alkyl- oder Arylgruppe, enthaltend 1 bis 12 Kohlenstoffatome, bedeutet und die mit inerten Substituenten substituiert sein kann);
b) Einheiten, abgeleitet von einer oder mehreren Dicarbonsäuren der Formel:
HOOC - R₁ - COOH (2)
worin R₁ eine Cycloalkyl-, Monoaryl-, Diaryl- oder kondensierte Arylgruppe, enthaltend 6 bis 18 Kohlenstoffatome, bedeutet, die mit inerten Substituentengruppen substituiert sein kann;
c) gegebenenfalls Einheiten, abgeleitet von einer oder mehreren Hydroxysäuren der Formel:
HO-Ar₁-(CH=CH)ₙ-COOH (3)
worin Ar₁ eine Monoaryl-, Diaryl- oder kondensierte Arylgruppe, enthaltend 6 bis 18 Kohlenstoffatome, bedeutet und die mit inerten Substituenten substituiert sein kann; und n 0 oder 1 bedeutet; und
d) gegebenenfalls Einheiten, abgeleitet von einem oder mehreren Diphenolen der Formel:
HO - Ar₂ - OH (4)
worin Ar₂ eine Monoaryl- oder kondensierte Arylgruppe, enthaltend 6 bis 18 Kohlenstoffatome, bedeutet und die mit mindestens einer Gruppe X substituiert sein kann (die vorstehend definiert ist); oder eine unsubstituierte Diaryl-gruppe bedeutet.

2. Polyester nach Anspruch 1, dadurch gekennzeichnet, daß die Diphenole gemäß (a) in Anmischung mit entsprechenden disubstituierten Derivaten vorliegen.

3. Polyester nach Anspruch 2, dadurch gekennzeichnet, daß die disubstituierten Derivate in dem Gemisch in Mengen bis zu 20 Mol-% vorliegen.

4. Polyester nach einem der vorangehenden Ansprüche, dadurch gekennzeichnet, daß mindestens 90 Mol-% der Verbindungen der Formeln (2), (3) und (4) ihre beiden funktionellen Gruppen in derartigen Stellungen aufweisen, daß sie eine polymere Kette in im wesentlichen koaxialer oder paralleler Richtung bilden.

5. Polyester nach einem der vorangehenden Ansprüche, dadurch gekennzeichnet, daß das substituierte Diphenol der Formel (1) Chlor- oder Brom-4,4'-dihydroxydiphenyl; (1-Methyl-1-phenylethyl)-4,4'-dihydroxydiphenyl; Naphthyl-4,4'-dihydroxydiphenyl; Acetyl-4,4'-dihydroxydiphenyl; Propionyl-4,4'-dihydroxydiphenyl, Benzoyl-4,4'-dihydroxydiphenyl oder Phenyl-4,4'-dihydroxydiphenyl bedeutet und/oder die aromatische Dicarbonsäure der Formel (2) Terephthalsäure; Chlor-oder Bromterephthalsäure; Methylterephthalsäure; 1,4-Naphthalindicarbonsäure; 1,5-Naphthalindicarbonsäure; 2,6-Naphthalindicarbonsäure; 4,4'-Diphenyldicarbonsäure; 3,3'-Dibrom4,4'-diphenyldicarbonsäure oder 4,4'-Stilbendicarbonsäure ist.

6. Polyester nach einem der vorangehenden Ansprüche, dadurch gekennzeichnet, daß die Hydroxysäure der Formel (3) p-Hydroxybenzoesäure; 3-Chlor-4-hydroxybenzoesäure; 3-Brom-4-hydroxybenzoesäure; 3,5-Dichlor-4-hydroxybenzoesäure; 3-Methyl-4-hydroxybenzoesäure; 3-tert.-Butyl-4-hydroxybenzoesäure; 4-Hydroxy-1-naphthoesäure; 6-Hydroxy-2-naphthoesäure; p-(4-Hydroxyphenyl)-benzoesäure oder p-Hydroxyzimtsäure ist und/oder das aromatische Diol der Formel (4) Hydrochinon; Phenylhydrochinon; (1-Phenylethyl)-hydrochinon; 2,5-Bis(phenylethyl)hydrochinon; 2-(α-Phenylisopropyl)hydrochinon; 2,5-Bis(α-phenylisopropyl)hydrochinon; 4,4'-Dihydroxydiphenyl oder 2,6-Dihydroxynaphthalin ist.

7. Polyester nach einem der vorangehenden Ansprüche, dadurch gekennzeichnet, daß das Molverhältnis (d)/(a) der Einheiten, abgeleitet von den Phenolen gemäß (d) zu Einheiten, abgeleitet Von Diphenolen gemäß (a) 0 bis 1 beträgt und das Molverhältnis (c)/(b) der Einheiten, abgeleitet von den Hydroxysäuren gemäß (c), zu den Einheiten, abgeleitet von den Säuren gemäß (b), 0 bis 4 beträgt.

8. Polyester nach einem der vorangehenden Ansprüche, dadurch gekennzeichnet, daß er eine Eigenviskosität, gemessen in einem 1:1-Gemisch von Trifluoressigsäure und Methylenchlorid bei 30°C oder in Pentafluorphenol bei 60°C bei einer Konzentration von 0,25 g/Liter von 0,3 bis 4 aufweist und eine Schmelztemperatur von 200° bin 350°C aufweist.

9. Verwendung eines Polyesters noch einem der vorangehenden Ansprüche als Faser, Folie, Formgegenstand, geformt durch Spritzen oder Extrusion, als Grundstoff für einen Verbundwerkstoff auf der Basis von anorganischen Fasern oder Füllstoffen oder im Gemisch mit anderen Polymeren.

## Revendications

1. Un polyester liquide, cristallin, aromatique et thermotropique qui comprend:
(a) des unités dérivés de un ou plusieurs phénols essentiellement monosubstitués de formule: 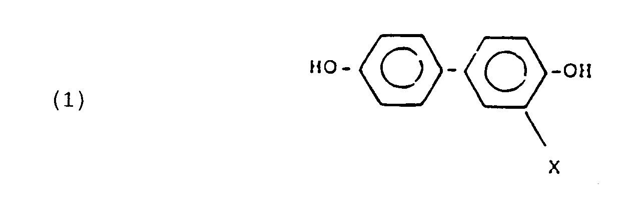 dans laquelle:
X est un atome d'halogène; un groupe aralkyle contenant au moins 7 atomes de carbone; un groupe monoaryle, diaryle, ou aryl condensé contenant de 6 à 18 atomes de carbone; ou un groupe céto - COR (dans lequel R est un groupe alkyle ou aryle contenant de 1 à 12 atomes de carbone et qui peut être substitué par des substituants inertes);
(b) des unités dérivées de un ou plusieurs acides dicarboxyliques de formule:
HOOC - R₁ - COOH (2)
dans laquelle:
R₁ représente un groupe cycloalkyle, monoaryle, diaryle ou aryl condensé contenant de 6 à 18 atomes de carbone, qui peut être substitué par des groupes substituants inertes;
(c) éventuellement des unités dérivées de un ou plusieurs hydroxyacides de formule:
HO-AR₁-(CH=CH)ₙCOOH (3)
dans laquelle:
Ar₁ est un groupe monaryle, diaryle ou aryl condensé contenant de 6 à 18 atomes de carbone, et qui peut être substitué par des substituants inertes; et
n est égal à 0 ou 1, et
(d) éventuellement, des unités dérivées de un ou plusieurs diphénols de formule:
HO - Ar₂ - OH (4)
dans laquelle:
Ar₂ représente un groupe monoaryle ou aryl condensé contenant de 6 à 18 atomes de carbone, et qui peut être substitué par au moins un groupe X (tel que défini ci-dessus) ou un groupe diaryle non substitué.

2. Un polyester selon la revendication 1, caractérisé en ce que les diphénols tels que définis dans (a) sont en mélange avec des dérivés disubstitués correspondants.

3. Un polyester selon la revendication 2, caractérisé en ce que les dérivés disubstitués sont présents dans le mélange en quantité pouvant atteindre 20% en moles.

4. Un polyester selon l'une quelconque des revendications précédentes, caractérisé en ce qu'au moins 90% en mole des composés de formules (2), (3) et (4) ont leurs deux groupes fonctionnels en des positions telles qu'elles forment une chaîne polymère sensiblement coaxiale ou parallèle.

5. Un polyester selon l'une quelconque des revendications précédentes, caractérisé en ce que le diphénol substitué de formule (1) est un chloro- ou ou bromo-4,4'-dihydroxy-diphényle; 1-(méthyl-1-phényl-éthyl)-4,4'-dihydroxydiphényle; naphtyl-4,4'-dihydroxydiphényle; acétyl-4,4ʼ-dihydroxydiphényle; propionyl-4,4'-dihydroxy-diphényle; benzoyl-4,4'-dihydroxy-diphényle ou phényl-4,4'-dihydroxy-diphényle; et/ou l'acide dicarboxylique aromatique de formule (2) est l'acide téréphtalique; acide chloro- et bromo-téréphtalique; acide méthyltéréphtalique; acide 1,4-napthalène dicarboxylique; acide 1,5-naphtalène dicarboxylique; acide 2,6-naphtalène dicarboxylique; acide 4,4'-diphényl-dicarboxylique; acide 3,3'-dibromo-4,4'-diphényldicarboxylique ou acide 4,4'-stilbène dicarboxylique.

6. Un polyester selon l'une quelconque des revendications précédentes, caractérisé en ce que l'acide hydroxylique de formule (3) est de l'acide p-hydroxybenzoïque, acide 3-chloro-4-hydroxybenzoïque; acide 3-bromo-4-hydroxybenzoïque; acide 3,5-dichloro-4-hydroxybenzoïque; acide 3-méthyl-4-hydroxybenzoïque; acide 3-tert.butyl-4-hydroxybenzoïque; acide 4-hydroxy-1-naphtoïque; acide 6-hydroxy-2-naphtoïque; acide p-(4-hydroxy-phényl)-benzoïque ou acide p-hydroxycinnamique; et/ou le diol aromatique de formule (4) est l'hydroquinone, la phénylhydroquinone; (1-phényléthyl)-hydrohydroquinone; 2,5-bis-(phényléthyl)hydroquinone; 2-(alpha-phényl-isopropyl)hydroquinone; 2,5-bis-(alpha-phényl-isopropyl)hydroquinone; 4,4'-dihydroxydiphényl ou 2,6-dihydroxy-naphtalène.

7. Un polyester selon l'une quelconque des revendications précédentes, caractérisé en ce que les rapports molaires (d)/(a) des unités dérivées des phénols tels que définis dans (d) aux unités dérivées des diphénols tels que définis dans (a) est de 0 à 1, et le rapport molaire, (c)/(b) des unités dérivées des hydroxyacides telles que définies dans (c) aux unités dérivées des acides, telles que définies dans (b), est de 0 à 4.

8. Un polyester selon l'une quelconque des revendications précédentes, caractérisé en ce qu'il présente une viscosité inhérente, mesurée dans un mélange 1/1 d'acide trifluoracétique et de chlorure de méthylène à 30°C ou dans du pentafluorophénol à 60°C, à une concentration de 0,25 g/litre ou de 0,3 à 0,4, et à une température de fusion de 200°C à 350°C.

9. L'utilisation d'un polyester tel que revendiqué dans l'une quelconque des revendications précédentes, en tant que fibre, film, article formé par injection ou extrusion, matrice pour un matériau composite à base de fibres inorganiques ou de charges, ou en mélange avec d'autres polymères.
